# EUROPÄISCHE PATENTSCHRIFT

(11) **EP 3 709 945 B1**
(45) Veröffentlichungstag und Bekanntmachung des Hinweises auf die Patenterteilung: **07.06.2023**
(21) Anmeldenummer: 18807577.4
(22) Anmeldetag: 15.11.2018
(51) Int. Cl.: A61G 3/06, B60P 1/43

(54) **TRITTLEISTENVORRICHTUNG FÜR EIN SCHIEBETRITT-EINSTIEGSSYSTEM FÜR EIN FAHRZEUG UND SCHIEBETRITT-EINSTIEGSSYSTEM MIT EINER TRITTLEISTENVORRICHTUNG**
TREAD DEVICE FOR A RETRACTABLE STEP ACCESS SYSTEM FOR A VEHICLE, AND RETRACTABLE STEP ACCESS SYSTEM WITH A TREAD DEVICE
DISPOSITIF DE SEUIL DE PORTE POUR SYSTÈME D'ACCÈS AVEC MARCHE ESCAMOTABLE POUR UN VÉHICULE ET SYSTÈME D'ACCÈS AVEC MARCHE ESCAMOTABLE PRÉSENTANT UN DISPOSITIF DE SEUIL DE PORTE

(30) Priorität: 16.11.2017 DE 102017126948
(43) Veröffentlichungstag der Anmeldung: 23.09.2020
(73) Patentinhaber: Knorr-Bremse Gesellschaft mit beschränkter Haftung, 2340 Mödling (AT)
(72) Erfinder: WILFLINGER, Johann, 4030 Linz (AT); GUGGENBICHLER, Stefan, 4020 Linz (AT); LEIMHOFER, Ricarda, 3300 Greinsfurth (AT)
(74) Vertreter: Aurigium Leischner & Luthe
(86) Internationale Anmeldenummer: PCT/EP2018/081422
(87) Internationale Veröffentlichungsnummer: WO 2019/096927

(56) Entgegenhaltungen:
- EP-A1- 0 416 539
- EP-A1- 0 931 532
- WO-A1-00/20252

## Beschreibung

Der vorliegende Ansatz bezieht sich auf eine Trittleistenvorrichtung für ein Schiebetritt-Einstiegssystem für ein Fahrzeug und ein Schiebetritt-Einstiegssystem mit einer Trittleistenvorrichtung.

Bei Rampen als Zustiegshilfen für Fahrzeuge gibt es Bauformen, bei denen eine Mehrzahl von zusätzlichen Klappen zum Einsatz kommen. Diese zusätzlichen Klappen werden beim Ausfahren der Rampe entgegen derer Federvorspannung aufgedrückt. Die EP 1 034 088 B1 beschreibt eine solche Rampe.

Vor diesem Hintergrund ist es die Aufgabe des vorliegenden Ansatzes eine verbesserte Trittleistenvorrichtung für ein Schiebetritt-Einstiegssystem für ein Fahrzeug und ein Schiebetritt-Einstiegssystem mit einer verbesserten Trittleistenvorrichtung zu schaffen.

Diese Aufgabe wird durch eine Trittleistenvorrichtung für ein Schiebetritt-Einstiegssystem für ein Fahrzeug und ein Schiebetritt-Einstiegssystem mit einer Trittleistenvorrichtung gemäß den Hauptansprüchen gelöst.

Die mit dem vorgestellten Ansatz erreichbaren Vorteile bestehen darin, dass eine mechanisch einfach konzipierte und reibungsarme Trittleistenvorrichtung geschaffen wird, bei der ein einziges Bauteil sowohl als eine Rampe zum Überbrücken eines Spalts als auch als ein Schmutzabstreifer dient.

Eine Trittleistenvorrichtung für ein Schiebetritt-Einstiegssystem für ein Fahrzeug weist eine Trittleisteneinrichtung und zumindest eine Abstreifereinrichtung auf. Die Abstreifereinrichtung ist beweglich mit der Trittleisteneinrichtung gekoppelt oder koppelbar und in Form einer Klappe ausgeformt. Die Abstreifereinrichtung ist dazu angeordnet und ausgebildet, um zum Abstreifen von Schmutz und Bilden einer Rampe auf der Schiebetritteinrichtung aufzuliegen.

Die Schiebetritteinrichtung kann als ein linear bewegliches Schiebebrett verstanden werden, das in einem Ruhezustand unterhalb der Trittleisteneinrichtung angeordnet ist und in einem Betriebszustand unter der Trittleisteneinrichtung hervorstehend angeordnet ist, um ein Betreten durch eine Person zu ermöglichen. Die Abstreifereinrichtung kann hierbei zwischen der Trittleisteneinrichtung und der Schiebetritteinrichtung des Schiebetritt-Einstiegssystems angeordnet sein, um einen Spalt zwischen der Trittleisteneinrichtung und der Schiebetritteinrichtung zu überbrücken und/oder abzudecken. Die Formulierung ausgebildet kann hier und im Folgenden bedeuten, dass das entsprechende Element geeignet ausgeformt ist.

Die hier vorgestellte Trittleistenvorrichtung realisiert einen einfachen jedoch effektiven Mechanismus, der dafür sorgt, dass der Spalt zwischen der Trittleisteneinrichtung und der Schiebetritteinrichtung durch die Abstreifereinrichtung stets verschlossen ist, damit kein Schmutz in den Spalt eindringen kann.

Durch die Trittleistenvorrichtung wird bei einem Schiebetritt anstelle einer Bürste eine kleine Rampe realisiert. Vorteilhafterweise ergibt sich durch die Rampe konstruktionsbedingt keine Stufe. Dies ist ein wesentlicher Vorteil im Vergleich zu einer Bürste, die häufig eine Stufe von mehr als 10mm bildet. Vorteilhafterweise ist die verwendete Klappe sowohl dazu geeignet Schmutz abzustreifen als auch (gleichzeitig) die Rampe auszuformen durch die eine Stufe vermieden wird.

Die Abstreifereinrichtung ist dazu angeordnet und ausgebildet, um sowohl in dem Betriebszustand, in dem die Schiebetritteinrichtung unter der Trittleisteneinrichtung hervorstehend angeordnet ist, als auch in einem Ruhezustand, in dem die Schiebetritteinrichtung unterhalb der Trittleisteneinrichtung angeordnet ist, beispielsweise schwerkraftbedingt oder alternativ oder zusätlich unter Verwendung einer Andrückeinrichtung, auf der Schiebetritteinrichtung aufzuliegen. In dem Betriebszustand kann die Schiebetritteinrichtung beispielsweise vollständig ausgefahren und im Ruhezustand vollständig eingefahren sein. Im Ruhezustand kann die Schiebetritteinrichtung unter der Trittleisteneinrichtung verstaut sein. Indem die Abstreifereinrichtung unabhängig von einem Ausfahrzustand der Schiebetritteinrichtung auf der Schiebetritteinrichtung aufliegt, kann permament das Eindringen von Schmutz in den Bereich zwischen Schiebetritteinrichtung Trittleisteneinrichtung verhindert werden.

Somit kann die Abstreifereinrichtung insbesondere auch dazu angeordnet und ausgebildet sein, um in dem Ruhezustand einen Spalt zwischen der Schiebetritteinrichtung unter der Trittleisteneinrichtung abzudichten. Indem die als Klappe ausgeformte Abstreifereinrichtung im verstauten Zustand des Trittbretts auf dem Trittbrett aufliegt, kann durch die Klappe auch im verstauten Zustand der Bereich zwischen Trittleiste und Trittbrett gegenüber "aussen" abgedichtet werden.

Um die Abstreifereinrichtung beweglich an der Trittleisteneinrichtung koppelbar zu machen, kann die Trittleistenvorrichtung eine Gelenkverbindungseinrichtung aufweisen, die dazu ausgebildet ist, um die Abstreifereinrichtung drehbar mit der Trittleisteneinrichtung zu koppeln oder koppelbar zu machen.

Die Abstreifereinrichtung kann dazu angeordnet und ausgebildet sein, um zum Bilden der Rampe schwerkraftbedingt auf der Schiebetritteinrichtung aufzuliegen. Das schwerkraftbedingte Aufliegen der Abstreifereinrichtung ist gemäß einer Ausführungsform ausschließlich durch ein Eigengewicht der Abstreifereinrichtung bedingt. In der Aufliegeposition kann die Abstreifereinrichtung somit lediglich mit dem Eigengewicht auf der Schiebetritteinrichtung aufliegen. So wirken bei einem Zurückführen der Schiebetritteinrichtung von dem Betriebszustand in den Ruhezustand vorteilhafterweise lediglich geringe Reibekräfte auf die Schiebetritteinrichtung. Hierbei ist es von Vorteil, wenn die Trittleistenvorrichtung, insbesondere die Gelenkverbindungseinrichtung der Trittleistenvorrichtung, gemäß einer Ausführungsform federlos, also ohne Vorhandensein einer Feder, ausgeformt ist. So werden erhöhte Spannungen oder Reibekräfte beim Überführen oder Zurückführen auf die Schiebetritteinrichtung vermieden und somit ein Verschleiß dieser minimiert. Federlos ausgeformt kann dabei bedeuten, dass das freie Ende der Abstreifereinrichtung ohne Einwirken einer Federkraft auf der Schiebetritteinrichtung aufliegt.

Zusätzlich oder alternativ kann die Trittleistenvorrichtung eine Andrückeinrichtung aufweisen, die dazu angeordnet und ausgebildet ist, die Abstreifereinrichtung zum Bilden der Rampe gegen die Schiebetritteinrichtung zu drücken. Eine Andrückeinrichtung kann beispielsweise eine Feder oder ein elastisches Element umfassen. Somit kann die Abstreifeinrichtung beispielsweise mit einer oder mehrere Federn auf das Trittbrett gedrückt werden. Dies ist vorteilhaft, wenn die Schwerkraft der Abstreifeinrichtung für eine Anwendungen als nicht ausreichend angesehen wird.

Beispielsweise kann die Trittleisteneinrichtung eine beispielsweise im Wesentlichen kreisförmige Aussparung aufweisen, in die ein Gelenkabschnitt der Abstreifereinrichtung aufgenommen oder aufnehmbar ist. Wenn der Gelenkabschnitt der Abstreifereinrichtung weiterhin einen entsprechenden Haken, beispielsweise ebenfalls kreisförmig, aufweist, der in der Aussparung aufgenommen oder aufnehmbar ist, kann dies eine funktionale Gelenkverbindung ermöglichen.

Um weiterhin eine praktische Schnappverbindung zwischen der Trittleisteneinrichtung und der Abstreifereinrichtung zu ermöglichen, ist es von Vorteil, wenn der Haken ein flexibles Material aufweist. Die Abstreifereinrichtung ist somit schnell und einfach an der Trittleisteneinrichtung montierbar und austauschbar.

Um in der Aufliegeposition der Abstreifereinrichtung ein ebenmäßiges oder barrierefreies Überbrücken des Spalts zu ermöglichen, kann ein der Gelenkverbindungseinrichtung abgewandtes freies Ende der Abstreifereinrichtung verjüngend zulaufend ausgeformt sein.

Zum Stabilisieren der Trittleistenvorrichtung in der Aufliegeposition kann die Abstreifereinrichtung eine Nut aufweisen, die dazu ausgeformt ist, um eine Nase der Trittleisteneinrichtung aufzunehmen. Die Nut kann hierbei beispielsweise an den Haken angrenzend angeordnet sein. Die Position des Abstreifers ist gemäß einer Ausführungsform in der eingefahrenen und in der ausgefahrenen Stellung (Betriebspositon) des Trittbrettes gleich. Die Position des Abstreifers ist von der Stellung des Trittbrettes unabhängig. Durch die Beweglichkeit des Abstreifers werden Toleranzen und Trittbrettunebenheiten ausgeglichen. Zusätzlich wird die Reibkraft zwischen Trittbrett und Abstreifer begrenzt.

Die Trittleistenvorrichtung weist eine Mehrzahl der Abstreifereinrichtungen auf, die benachbart zueinander jeweils mit der Trittleisteneinrichtung gekoppelt angeordnet oder koppelbar sind. So können diese Abstreifereinrichtungen in der Aufliegeposition eventuelle Unebenheiten der Schiebetritteinrichtung oder Trittleisteneinrichtung besonders vorteilhaft ausgleichen. Ein Schiebetritt-Einstiegssystem weist die Trittleistenvorrichtung in einer der vorgestellten Varianten und die Schiebetritteinrichtung auf, die linear beweglich unter der Trittleisteneinrichtung angeordnet ist. Ein solches Schiebetritt-Einstiegssystem kann als vollständiger Ersatz für bekannte Schiebetritt-Einstiegssysteme dienen, wobei das hier vorgestellte Schiebetritt-Einstiegssystem vorteilhafterweise die Vorteile der Trittleistenvorrichtung realisiert. Das hier vorgestellte Schiebetritt-Einstiegssystem kann beispielsweise als ein Einstiegssystem für ein Fahrzeug, beispielsweise für ein Schienenfahrzeug, ausgeformt sein.

Ausführungsbeispiele des hier vorgestellten Ansatzes werden in der nachfolgenden Beschreibung mit Bezug zu den Figuren näher erläutert. Es zeigen:
Fig. 1 eine seitliche Querschnittdarstellung eines Schiebetritt-Einstiegssystems mit einer Trittleistenvorrichtung gemäß einem Ausführungsbeispiel;
Fig. 2 eine perspektivische Aufsicht auf ein Schiebetritt-Einstiegssystem mit einer Trittleistenvorrichtung gemäß einem Ausführungsbeispiel;
Fig. 3 eine schematische Darstellung eines Fahrzeugs mit einem Schiebetritt-Einstiegssystem gemäß einem Ausführungsbeispiel;
Fig. 4 eine schematische Darstellung eines Schiebetritt-Einstiegssystems gemäß einem Ausführungsbeispiel; und
Fig. 5 eine schematische Darstellung eines Schiebetritt-Einstiegssystems gemäß einem Ausführungsbeispiel.

In der nachfolgenden Beschreibung günstiger Ausführungsbeispiele des vorliegenden Ansatzes werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

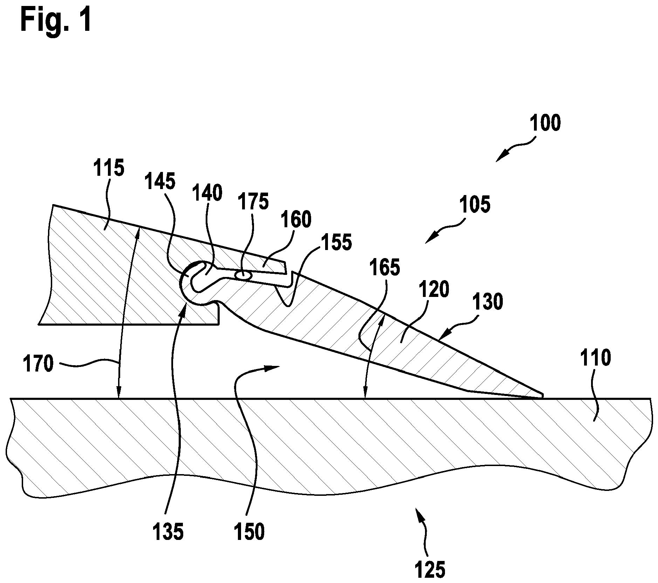

**Fig. 1** zeigt eine seitliche Querschnittdarstellung eines Schiebetritt-Einstiegssystems 100 mit einer Trittleistenvorrichtung 105 gemäß einem Ausführungsbeispiel.

Das Schiebetritt-Einstiegssystem 100 umfasst die Trittleistenvorrichtung 105 und eine Schiebetritteinrichtung 110, die unterhalb der Trittleistenvorrichtung 105 linear beweglich angeordnet ist. Das Schiebetritt-Einstiegssystem 100 ist gemäß diesem Ausführungsbeisopiel als ein Einstiegssystem für ein Fahrzeug ausgeformt.

Die Trittleistenvorrichtung 105 umfasst eine Trittleisteneinrichtung 115 und zumindest eine Abstreifereinrichtung 120. Die Abstreifereinrichtung 120 ist beweglich mit der Trittleisteneinrichtung 115 gekoppelt und dazu angeordnet und ausgeformt, um gemäß einem Ausführungsbeispiel schwerkraftbedingt eine auf der Schiebetritteinrichtung 110 aufliegende Aufliegeposition 130 einzunehmen.

Die Schiebetritteinrichtung 110 wird auch als Trittbrett, die Trittleisteneinrichtung 115 auch als Trittleiste und die Abstreifereinrichtung 120 auch als Abstreifer bezeichnet.

Die Trittleistenvorrichtung 105 weist gemäß einem Ausführungsbeispiel eine Gelenkverbindungseinrichtung 135 auf, die dazu ausgebildet ist, um die Abstreifereinrichtung 120 drehbar mit der Trittleisteneinrichtung 115 zu koppeln. Die Trittleistenvorrichtung 105 ist gemäß einem Ausführungsbeispiel federlos ausgeformt. Gemäß diesem Ausführungsbeispiel weist die Trittleisteneinrichtung 115 eine kreisförmige Aussparung 140 auf, in die ein Gelenkabschnitt 145 der Abstreifereinrichtung 120 aufgenommen ist. Der Gelenkabschnitt 145 weist beispielhaft einen Haken auf, der in der Aussparung 140 aufgenommen ist. Dieser Haken weist gemäß diesem Ausführungsbeispiel ein flexibles Material auf.

Die Abstreifereinrichtung 120 ist gemäß diesem Ausführungsbeispiel in Form einer eine Rampe bildenden Klappe ausgeformt und überbrückt einen Spalt 150 zwischen der Trittleisteneinrichtung 115 und der Schiebetritteinrichtung 110. Gemäß einem Ausführungsbeispiel ist die Abstreifereinrichtung 120 brettförmig ausgeformt. Dabei verjüngt sich eine Dicke der Abstreifereinrichtung 120 zu einem auf der Schiebetritteinrichtung 110 aufliegenden Auflageende hin. Das Auflageende weist auf einer der Schiebetritteinrichtung 110 zugewandten Seite einen abgeflachten Abschnitt auf, sodass die Abstreifereinrichtung 120 an dem Auflageende zumindest annähernd plan auf einer Oberlfläche der Schiebetritteinrichtung 110 aufliegen kann. Durch die Rampe wird eine Stufe zwischen der Schiebetritteinrichtung 110 und der Trittleisteneinrichtung 115 vermieden. Durch die bewegliche Kopplung zwischen Abstreifereinrichtung 120 und Trittleisteneinrichtung 115 können beispielsweise Toleranzen bezüglich des Spalts 150 oder Unebenheiten der Schiebetritteinrichtung 110 ausgeglichen werden.

Die Abstreifereinrichtung 120 weist angrenzend an den Gelenkabschnitt 145 eine Nut 155 auf, die dazu ausgeformt ist, um eine Nase 160 der Trittleisteneinrichtung 115 aufzunehmen. Gemäß dem gezeigten Ausführugnsbeispiel ist die Nase 160 nicht vollständig in die Nut 155 eingetaucht. Die Abstreifereinrichtung 120 kann auf diese Weise noch geringfügig nach oben gekippt werden. Auf diese Weise können beispielsweise Unebenheiten auf der Oberseite der Schiebetritteinrichtung 110 beim Verfahren der Schiebetritteinrichtung 110 überwunden werden.

Gemäß einem Ausführungsbeispiel ligt das freie Ende der Abstreifereinrichtung 120 sowohl im ausgefahrenen Betriebszustand der Schiebetritteinrichtung 110 als auch im Ruhezustand der Schiebetritteinrichtung 110, in dem die Schiebetritteinrichtung 110 weitestgehend unter die Trittleisteneinrichtung 115 verfahren ist, auf einer im verbauten Zustand des Schiebetritt-Einstiegssystems 100 oben liegenden Oberfläche der Schiebetritteinrichtung 110 auf. Auf diese Weise wird der Spalt 150 zwischen der Schiebetritteinrichtung 110 und der Trittleisteneinrichtung 115 auch im verstauten Zustand der Schiebetritteinrichtung 110 durch die Abstreifereinrichtung 120 abgedichtet.

Im Folgenden werden Ausführungsbeispiele der Trittleistenvorrichtung 105 noch einmal mit anderen Worten beschrieben.

Der vorliegende Ansatz betrifft die Abstreifereinrichtung 120 in Form eines Abstreifers für Einstiegssysteme mit Schiebetritt. Durch die Abstreifereinrichtung 120 werden Verunreinigungen, also Steine, Eis, Schnee etc., von der Schiebetritteinrichtung 110 in Form eines Trittbretts abgestreift und vor dem Eindringen in das Innere der Schiebetritteinrichtung 110 bzw. in den Spalt 150 gehindert. Des Weiteren dient die hier vorgestellte Abstreifereinrichtung 120 als eine Rampe, indem eine Stufe zwischen der Schiebetritteinrichtung 110 und Trittleiste in Form der Trittleisteneinrichtung 115 überbrückt wird. Dadurch wird ein barrierefreier Ein- und Ausstieg von Fahrgästen in das Fahrzeug ermöglicht, welches das Schiebetritt-Einstiegssystem 100 aufweist.

Vorteilhafterweise ist für das Abstreifen von Verunreinigungen wie Steinen, Eis, Schnee, etc. von der Schiebetritteinrichtung 110 sowie für die Verhinderung des Eindringens solcher Verunreinigungen in ein Inneres der Schiebetritteinrichtung 110 und für die Überbrückung der Stufe zwischen der Schiebetritteinrichtung 110 und der Trittleisteneinrichtung 115, lediglich ein einziges Element notwendig, nämlich die Abstreifereinrichtung 120. Hierbei erfüllt das Schiebetritt-Einstiegssystem 100 zudem steigende Anforderungen hinsichtlich Barrierefreiheit und weist dabei vorteilhafterweise einen mechanisch sehr schlichten Aufbau auf.

Die Verunreinigungen werden von der Abstreifereinrichtung 120 bei einem Zurückführen der Schiebetritteinrichtung 110 von dem hier gezeigten Betriebszustand 125 in einen Ruhezustand, in dem die Schiebetritteinrichtung 110 unter der Trittleisteneinrichtung 115 verdeckt angeordnet ist, abgestreift und vor dem Eindringen in das Innere der Schiebetritteinrichtung 110 gehindert. Durch die Rampenform der Abstreifereinrichtung 120 wird die Stufe zwischen der Schiebetritteinrichtung 110 und der Trittleisteneinrichtung 115 überbrückt. Die Anforderungen bezüglich der Barrierefreiheit können somit erfüllt werden.

Gemäß einem Ausführungsbeispiel ist die Abstreifereinrichtung 120 in der Trittleisteneinrichtung 115 über die Gelenkverbindungseinrichtung 135, die auch als Drehgelenk bezeichnet werden kann, drehbar gelagert und liegt aufgrund der Schwerkraft auf der Schiebetritteinrichtung 110 auf. Die Abstreifereinrichtung 120 besteht gemäß diesem Ausführungsbeispiel aus Hartkunststoff, bevorzugterweise aus Polyoxymethylen, kurz "POM". Durch die drehbare Lagerung kann die Abstreifereinrichtung 120 etwaige Toleranzen der Schiebetritteinrichtung 110 und Oberflächenabweichungen der Schiebetritteinrichtung 110 ausgleichen und einen gleichmäßigen Kontakt mit der Schiebetritteinrichtung 110 sicherstellen. Verunreinigungen wie Steine, Eis, Schnee etc. werden beim Einfahren der Schiebetritteinrichtung 110 abgestreift und können nicht in den Spalt 150 zwischen der Trittleisteneinrichtung 115 und dem der Schiebetritteinrichtung 110 und in weiterer Folge auch nicht in den Innenraum des Tritts gelangen. Durch die drehbare Lagerung wird die Abstreifereinrichtung 120 nur durch ihr Eigengewicht auf die Schiebetritteinrichtung 110 gedrückt, wodurch eine Reibkraft minimiert wird. Eine Oberseite der Abstreifereinrichtung 120 bildet gemäß diesem Ausführungsbeispiel mit der Horizontalen einen Winkel 165 zwischen 20° und 40°, beispielsweise einen Winkel von 27°. Die Abstreifereinrichtung 120 bildet somit eine Rampe zwischen der Schiebetritteinrichtung 110 und der Trittleisteneinrichtung 115. Anschließend an die Abstreifereinrichtung 120 ist die Trittleisteneinrichtung 115 gemäß diesem Ausführungsbeispiel mit einem weiteren Winkel 170 zwischen 10° und 20°, beispielsweise einen Winkel von 14° weitergeführt.

Praktische Anwendung findet die Trittleistenvorrichtung 105 wie hier gezeigt in Einstiegssystemen mit Schiebetritteinrichtung 110. Neben der Funktion als Abstreifer für die Schiebetritteinrichtung 110 ermöglicht die Trittleistenvorrichtung 105 einen barrierefreien Ein- und Ausstieg der Passagiere. Durch die rampenförmige Ausführung der Abstreifereinrichtung 120 erfolgt der Übergang zwischen Schiebetritteinrichtung 110 und Trittleisteneinrichtung 115 stufenlos.

Vorteilhafterweise werden zwei Funktionen in einem Bauteil, nämlich der Abstreifereinrichtung 120, vereint. Zum einen eine Funktion als Abstreifer und zum anderen eine Funktion als Rampe. Für die Erfüllung eines barrierefreien Einstiegs ist kein aufwendiger kinematischer Tritt nötig, es ist vielmehr eine Verwendung eines "Standard"-Schiebetritts wie der hier gezeigten Schiebetritteinrichtung 110 möglich. Die Abstreifereinrichtung 120 ist gemäß einem Ausführungsbeispiel dank einer Schnappverbindung zu der Trittleisteneinrichtung 115 bei Verschleiß oder Beschädigung leicht austauschbar. Insgesamt sind gegenüber einem kinematischen Tritt nur wenige bewegte Teile notwendig, wodurch ein Kostenvorteil entsteht sowie insgesamt wenig Bauraum vonnöten ist.

Gemäß einem Ausführungsbeispiel weist die Trittleistenvorrichtung 105 eine Andrückeinrichtung 175, beispielsweise zumindest eine Feder auf, um die Abstreifereinrichtung 120 zum Bilden der Rampe gegen die Schiebetritteinrichtung 110 zu drücken. Beispielhaft ist die Andrückeinrichtung 175 zwischen der Trittleisteneinrichtung 115 und der Abstreifereinrichtung 120 angeordnet.

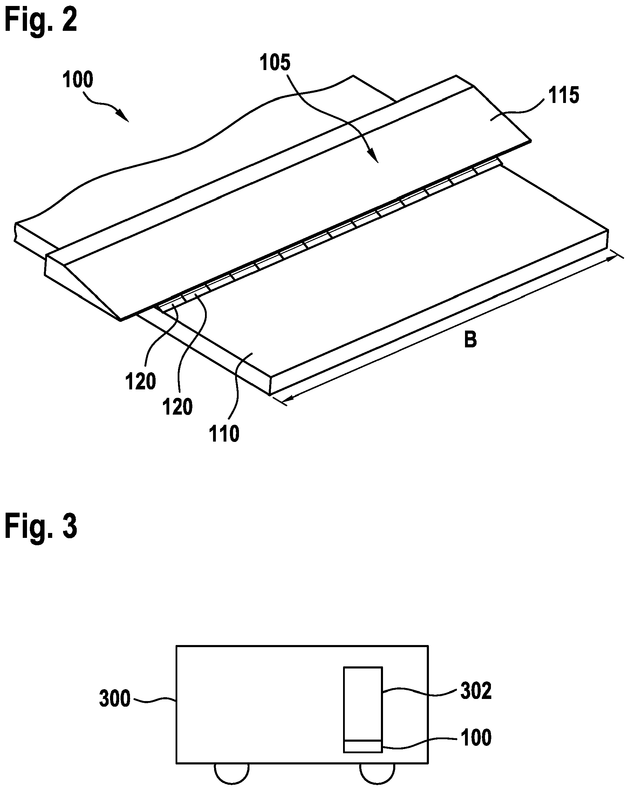

**Fig. 2** zeigt eine perspektivische Aufsicht auf ein Schiebetritt-Einstiegssystem 100 mit einer Trittleistenvorrichtung 105 gemäß einem Ausführungsbeispiel. Dabei kann es sich um ein Ausführungsbeispiel des anhand von Fig. 1 beschriebenen Schiebetritt-Einstiegssystems 100 handeln, das gemäß der Erfindung eine Mehrzahl von Abstreifereinrichtungen 120 aufweist.

Die Abstreifereinrichtungen 120 sind benachbart zueinander mit der Trittleisteneinrichtung 115 gekoppelt. Da es aufgrund von Belastungen durch Passagiere zu einer Durchbiegung der Schiebetritteinrichtung 110 und/oder der Trittleisteneinrichtung 115 kommen kann, ist der Abstreifer in Segmente in Form von einzelnen Abstreifereinrichtungen 120 unterteilt. Dies stellt ein gleichmäßiges Aufliegen der Abstreifereinrichtungen 120 auf einer gesamten Breite B der Schiebetritteinrichtung 110 sicher. Weiteres wird dadurch ein Klemmen der drehbaren Lagerung der Abstreifereinrichtungen 120 an der Trittleisteneinrichtung 115 verhindert. Die drehbare Lagerung ist durch das flexible Material der Haken der Abstreifereinrichtungen 120 jeweils als Schnappverbindung ausgeführt, was einen Einbau und eine Austauschbarkeit der Abstreifereinrichtungen 120 erleichtert.

**Fig. 3** zeigt eine schematische Darstellung eines Fahrzeugs 300 mit einem Schiebetritt-Einstiegssystem 100 gemäß einem Ausführungsbeispiel. Bei dem Fahrzeug 300 handelt es sich beispielhaft um ein Fahrzeug zur Personenbeförderung, beispielsweise einen Waggon eines Zuges oder um einen Bus. Das Fahrzeug 300 weist eine Tür 302 auf. Um das Einsteigen und Austeigen durch die Tür 302 zu erleichtern ist das Schiebetritt-Einstiegssystem 100 unterhalb der Tür 302 angeordnet. Das Schiebetritt-Einstiegssystem 100 kann wie anhand der Figuren 1 und 2 beschrieben ausgeführt sein.

Wenn die Tür 302 geöffnet wird, wird die Schiebetritteinrichtung des Schiebetritt-Einstiegssystem 100 zum Einnehmen des Betriebszustand unter der Trittleisteneinrichtung des Schiebetritt-Einstiegssystems hervorgefahren. Dabei liegt das freie Ende der die Abstreifereinrichtung des Schiebetritt-Einstiegssystems 100 fortlaufend auf der Schiebetritteinrichtung auf.

Wen die Tür 302 geschlossen wird, wir die Schiebetritteinrichtung aus dem Betriebszustand wieder unter die Trittleisteneinrichtung zurück verfahren. In dem die Abstreifereinrichtung auch beim Zurückverfahren fortlaufend auf der Schiebetritteinrichtung aufliegt und dabei durch die Schiebetritteinrichtung abgestützt wird, kann sich auf der Schiebetritteinrichtung befindlicher Schmutz beim Zurückverfahren der Schiebetritteinrichtung von der Abstreifereinrichtung abgestreift werden.

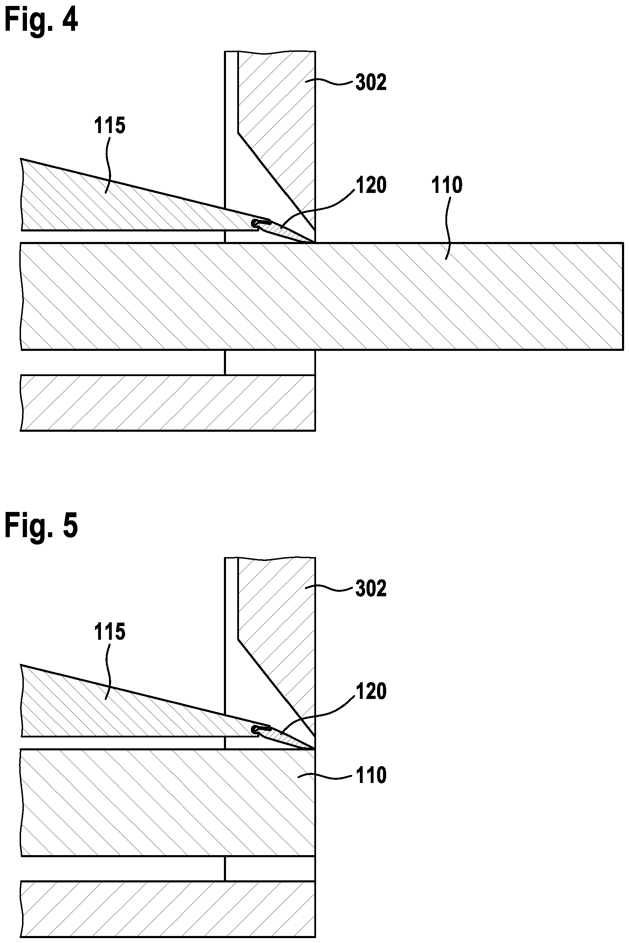

**Fig. 4** zeigt eine schematische Darstellung eines Schiebetritt-Einstiegssystems mit einer Trittleistenvorrichtung gemäß einem Ausführungsbeispiel. Dabei kann es sich um ein Ausführungsbeispiel des anhand von Fig. 1 beschriebenen Schiebetritt-Einstiegssystems handeln.

Gezeigt ist eine Tür 302, eine Schiebetritteinrichtung 110 in Form eines Trittbretts, eine Trittleisteneinrichtung 115 und eine mit der eine Trittleisteneinrichtung 115 gekoppelte Abstreifereinrichtung 120 in Form eines Abstreifers. Die Schiebetritteinrichtung 110 ist in einem ausgefahrenen Zustand gezeigt.

Eine Neigung der Abstreifereinrichtung 120 entspricht gemäß einem Ausführungsbeispiel in etwa einer Neigung einer Oberseite der Trittleisteneinrichtung 115. Dadurch ergibt sich ein annähernd geradliniger und insbesondere ein stufenfreier Übergang von einer Oberseite der Schiebetritteinrichtung 110 zu der Oberseite der Trittleisteneinrichtung 115.

**Fig. 5** zeigt eine schematische Darstellung des in Fig. 4 gezeigten Schiebetritt-Einstiegssystems, wobei die Schiebetritteinrichtung 110 nun in einem eingefahrenen Zustand dargestellt ist.

Gemäß diesem Ausführungsbeispiel weist die Abstreifereinrichtung 120 in dem eingefahrenen Zustand der Schiebetritteinrichtung 110 die gleiche Neigung auf wie in dem ausgefahrenen Zustand der Schiebetritteinrichtung 110.

Somit befindet sich Abstreifer befindet sich die Abstreifereinrichtung 120 unabhängig von dem Ausfahrzustand der Schiebetritteinrichtung 110 immer in der Aufliegeposition, wie sie anhand von Fig. 1 beschrieben ist. Die Beweglichkeit zwischen der Abstreifereinrichtung 120 und der Trittleisteneinrichtung 115 dient beispielsweise zum Ausgleich von Toleranzen oder Trittbrettunebenheiten sowie zur Begrenzung der Reibkraft bei Verfahren der Schiebetritteinrichtung 110.

Aus Fig. 5 ist ersichtlich, dass sich die Abstreifereinrichtung 120 auch im eingefahrenen Zustand der Schiebetritteinrichtung 110 auf der Oberseite der Schiebetritteinrichtung 110 abstützt. Gemäß diesem Ausführungsbeispiel schließt das freie Ende der Abstreifereinrichtung 120 bündig mit einer Abschlusskante der eingefahrenen Schiebetritteinrichtung 110 ab.

### BEZUGSZEICHENLISTE

- 100: Schiebetritt-Einstiegssystem
- 105: Trittleistenvorrichtung
- 110: Schiebetritteinrichtung
- 115: Trittleisteneinrichtung
- 120: Abstreifereinrichtung
- 125: Betriebszustand
- 130: Aufliegeposition
- 135: Gelenkverbindungseinrichtung
- 140: Aussparung
- 145: Gelenkabschnitt
- 150: Spalt
- 155: Nut
- 160: Nase
- 165: Winkel
- 170: weiterer Winkel
- 175: Andrückeinrichtung
- 300: Fahrzeug
- 302: Tür

## Patentansprüche

1. Trittleistenvorrichtung (105) für ein eine linear bewegliche Schiebetritteinrichtung (110) umfassendes Schiebetritt-Einstiegssystem (100) für ein Fahrzeug (300), wobei die Trittleistenvorrichtung (105) die folgenden Merkmale aufweist:
eine Trittleisteneinrichtung (115), und
eine Mehrzahl benachbart zueinander angeordneter beweglich mit der Trittleisteneinrichtung (115) gekoppelter oder koppelbarer Abstreifereinrichtungen (120), die je in Form einer Klappe ausgeformt sind und dazu angeordnet und ausgebildet sind, um zum Abstreifen von Schmutz und Bilden einer Rampe auf der Schiebetritteinrichtung (110) aufzuliegen, wobei die Abstreifereinrichtungen (120) dazu angeordnet und ausgebildet sind, um sowohl in einem Betriebszustand, in dem die Schiebetritteinrichtung (110) unter der Trittleisteneinrichtung (115) hervorstehend angeordnet ist, als auch in einem Ruhezustand, in dem die Schiebetritteinrichtung (110) unterhalb der Trittleisteneinrichtung (115) angeordnet ist, auf der Schiebetritteinrichtung (110) aufzuliegen.

2. Trittleistenvorrichtung (105) gemäß Anspruch 1, wobei die Abstreifereinrichtung (120) dazu angeordnet und ausgebildet ist, um in dem Ruhezustand einen Spalt zwischen der Schiebetritteinrichtung (110) unter der Trittleisteneinrichtung (115) abzudichten.

3. Trittleistenvorrichtung (105) gemäß einem der vorangegangenen Ansprüche, mit einer Gelenkverbindungseinrichtung (135), die dazu ausgebildet ist, um die Abstreifereinrichtung (120) drehbar mit der Trittleisteneinrichtung (115) zu koppeln.

4. Trittleistenvorrichtung (105) gemäß einem der vorangegangenen Ansprüche , bei der die Abstreifereinrichtung (120) dazu angeordnet und ausgebildet ist, um zum Bilden der Rampe schwerkraftbedingt auf der Schiebetritteinrichtung (110) aufzuliegen.

5. Trittleistenvorrichtung (105) gemäß einem der vorangegangenen Ansprüche , mit einer Andrückeinrichtung, die dazu angeordnet und ausgebildet ist, die Abstreifereinrichtung (120) zum Bilden der Rampe gegen die Schiebetritteinrichtung (110) zu drücken.

6. Trittleistenvorrichtung (105) gemäß einem der vorangegangenen Ansprüche, bei der die Trittleisteneinrichtung (115) eine Aussparung (140) zum Aufnehmen eines Gelenkabschnitt (145) der Abstreifereinrichtung (120) aufweist.

7. Trittleistenvorrichtung (105) gemäß Anspruch 6, bei der der Gelenkabschnitt (145) der Abstreifereinrichtung (120) einen Haken aufweist, der in der Aussparung (140) aufgenommen oder aufnehmbar ist.

8. Trittleistenvorrichtung (105) gemäß Anspruch 7, bei der der Haken ein flexibles Material aufweist.

9. Trittleistenvorrichtung (105) gemäß einem der vorangegangenen Ansprüche, bei der die Abstreifereinrichtung (120) eine Nut (155) aufweist, die dazu ausgeformt ist, um eine Nase (160) der Trittleisteneinrichtung (115) aufzunehmen.

10. Schiebetritt-Einstiegssystem (100) mit der Trittleistenvorrichtung (105) gemäß einem der vorangegangenen Ansprüche und der Schiebetritteinrichtung (110), die linear beweglich unter der Trittleisteneinrichtung (115) angeordnet ist.

## Claims

1. Tread device (105) for a retractable step access system (100), comprising a linearly movable retractable step unit (110), for a vehicle (300), wherein the tread device (105) has the following features:
a tread unit (115), and
a plurality of wiper units (120) arranged adjacent to one another, which are coupled or can be coupled movably to the tread unit (115), are configured in the form of a flap and are arranged and designed in order to rest on the retractable step unit (110) in order to wipe off dirt and form a ramp, wherein the wiper unit (120) is arranged and designed in order to rest on the retractable step unit (110) both in an operating state, in which the retractable step unit (110) is arranged so as to protrude from under the tread unit (115), and in an inoperative state, in which the retractable step unit (110) is arranged underneath the tread unit (115).

2. Tread device (105) according to claim 1, wherein the wiper unit (120) is arranged and designed in order, in the inoperative state, to seal a gap between the retractable step unit (110) under the tread unit (115).

3. Tread device (105) according to any of the preceding claims, having a hinge joint unit (135) which is designed to couple the wiper unit (120) rotatably to the tread unit (115).

4. Tread device (105) according to any of the preceding claims, in which the wiper unit (120) is arranged and designed to rest on the retractable step unit (110) under gravitational force in order to form the ramp.

5. Tread device (105) according to any of the preceding claims, having a press-on unit which is arranged and designed to press the wiper unit (120) against the retractable step unit (110) in order to form the ramp.

6. Tread device (105) according to any of the preceding claims, in which the tread unit (115) has a recess (140) for receiving a hinge portion (145) of the wiper unit (120).

7. Tread device (105) according to claim 6, in which the hinge portion (145) of the wiper unit (120) has a hook which is accommodated or can be accommodated in the recess (140).

8. Tread device (105) according to claim 7, in which the hook comprises a flexible material.

9. Tread device (105) according to any of the preceding claims, in which the wiper unit (120) has a groove (155) which is configured in order to accommodate a lug (160) of the tread unit (115).

10. Retractable step access system (100) with the tread device (105) according to any of the preceding claims and the retractable step unit (110) which is arranged in a linearly movable manner under the tread unit (115).

## Revendications

1. Appareillage (105) de marche d'un système (100) d'accès à marchepied coulissant, comprenant un dispositif (110) de marchepied coulissant mobile linéairement, pour un véhicule (300), dans lequel l'appareillage (105) de marche a les caractéristiques suivantes :
un dispositif (115) de marche, et
une pluralité de dispositifs (120) de détachement disposés les uns à côté des autres et accouplés de manière mobile au dispositif (115) de marchepied coulissant ou pouvant l'être, qui sont formés chacun d'un volet et qui sont disposés et constitués pour, en s'appliquant au dispositif (110) de marchepied coulissant, détacher de la saleté et former une rampe, dans lequel les dispositifs (120) de détachement sont disposés et constitués pour s'appliquer, tant dans un état de fonctionnement, dans lequel le dispositif (110) de marchepied coulissant est disposé en saillie sous le dispositif (115) de marche, que dans un état de repos, dans lequel le dispositif (110) de marchepied est disposé en-dessous du dispositif (115) de marche, s'appliquer au dispositif (110) de marchepied coulissant.

2. Appareillage (105) de marche suivant la revendication 1, dans lequel le dispositif (120) de détachement est disposé et constitué pour, dans l'état de repos, rendre étanche un intervalle entre le dispositif (110) de marchepied coulissant et le dispositif (115) de marche.

3. Appareillage (105) de marche suivant l'une des revendications précédentes, comprenant un dispositif (135) de liaison articulée, qui est constitué pour accoupler le dispositif (120) de détachement à rotation au dispositif (115) de marche.

4. Appareillage (105) de marche suivant l'une des revendications précédentes, dans lequel le dispositif (120) de détachement est disposé et constitué pour s'appliquer, sous la force de gravité, au dispositif (110) de marche pour la formation de la rampe.

5. Appareillage (105) de marche suivant l'une des revendications précédentes, comprenant un dispositif d'application d'une pression, qui est disposé et constitué pour appliquer par pression le dispositif (120) de séparation sur le dispositif (110) de marchepied coulissant pour la formation de la rampe.

6. Appareillage (105) de marche suivant l'une des revendications précédentes, dans lequel le dispositif (115) de marche a un évidement (140) de réception d'une partie (145) d'articulation du dispositif (120) de détachement.

7. Appareillage (105) de marche suivant la revendication 6, dans lequel la partie (145) d'articulation du dispositif (120) de détachement a un crochet, qui est reçu dans l'évidement (140) ou qui peut l'être.

8. Appareillage (105) de marche suivant la revendication 7, dans lequel le crochet comporte du matériau souple.

9. Appareillage (105) de marche suivant l'une des revendications précédentes, dans lequel le dispositif (120) de détachement a une rainure (155), qui est conformée pour recevoir un bec (160) du dispositif (115) de marche.

10. Système (100) d'accès à marchepied coulissant, comprenant l'appareillage (105) de marche suivant l'une des revendications précédentes et le dispositif (110) de marchepied coulissant, qui est monté mobile linéairement sous le dispositif (115) de marche.
